# EUROPEAN PATENT APPLICATION

(11) **EP 1 477 669 A2**
(43) Date of publication of application: **17.11.2004**
(21) Application number: 04076316.1
(22) Date of filing: 03.05.2004
(51) Int. Cl.: F04B 19/00, G01N 27/447

(54) **Device for controlling the mass flowrate of a liquid flow in a liquid flow channel**

(30) Priority: 13.05.2003 NL 1023404
(71) Applicant: BERKIN B.V., NL-7261 AK Ruurlo (NL)
(72) Inventor: Schasfoort, Richardus Bernardus Maria, 7571 AK Oldenzaal (NL); Lötters, Joost Conrad, 7011 AH Gaanderen (NL)
(74) Representative: Koppen, Jan, Drs.

(57) **Abstract**

A device for controlling the mass flowrate of a liquid flow in a liquid flow channel, wherein a liquid is transported from a reservoir through the channel by electrosmotic pumping. The channel is associated with thermal flow sensor means which provide an output signal for controlling the pump action.

## Description

The invention relates to a device for measuring and controlling the mass flowrate of a liquid flow in a liquid flow channel.

Known devices of the above kind generally have the disadvantage that they are not or less suitable for very small liquid flows, for example flows of the order of nanoliters per minute. The liquid flow is usually kept going in that a level difference is provided, or in that the liquid is present in a vessel and a compressor builds up a pressure above the liquid, whereby the liquid is forced from an opening in the vessel wall with a certain velocity. An alternative is, for example, the use of a (mechanical) pump with a stroke mechanism.

The invention has for its object to provide a device of the kind mentioned in the opening paragraph which is particularly suitable for operation in the nanoliters per minute range and/or lower, for example picoliters per minute.

This object is achieved by a device for measuring and controlling the mass flowrate of a liquid flow in a liquid flow channel which is characterized in that the liquid flow channel is a liquid flow channel with pump action, and in that a flow sensor of the thermal type is associated with the liquid flow channel with pump action, which flow sensor produces an output signal which is representative of a measured mass flowrate, said output signal controlling the pump action.

The invention is based on the recognition that a functional measuring and control unit, in particular one designed for measuring weak flows, can be obtained in that a flow sensor of the thermal type is combined, more in particular is integrated, with a liquid flow channel that has a pump action. The thermal flow sensor, the various embodiments of which will be discussed further below, produces a measuring signal that can be used, after feedback, for controlling the "drive" of the liquid flow channel with pump action.

A suitable type of liquid flow channel with pump action is a so-termed "electrosmotic" liquid channel, which has walls of an electrically insulating material and in which a voltage applied in the longitudinal direction of the channel provides a transport voltage for the liquid in the channel.

The invention is based in general on the use of such an electrosmotic liquid channel as a pump. Variation of the voltage in the longitudinal direction of the osmotic channel under the influence of the fed back output signal renders it possible to adjust very low values of the mass flow of the liquid in the liquid flow channel.

According to the invention, mass flowmeters of the thermal type are highly suitable for being combined, and in particular being integrated, with an electrosmotic liquid channel. These flowmeters comprise in their simplest form a thermally conducting flow tube with two electrical resistors, for example in the form of windings of resistance wire capable of acting both as heaters and as temperature sensors. The mass flowrate can be determined from the electric power required for keeping the temperature difference between the sensors constant during flow, or from the temperature difference arising during flow (and being a function of the flow).

Usual flowmeters of the thermal type have a body that allows the passage of a liquid in the form of a (capillary) tube (fluid passageway) of a metal material with good thermal conductivity, also denoted the flow tube; cf. for example EP-A 0 395 126. The tube is usually made of stainless steel, which is a good conductor of both heat and electricity. It would thus appear to be far from obvious to combine or integrate a thermal flow sensor with an electrosmotic pump because the latter requires a liquid flow channel with walls of a material having a poor (or low) electrical conductivity. More in particular, a material with poor electrical conductivity usually also has a poor thermal conductivity.

The invention is based on the recognition that it is very well possible to use a fluid passageway made of a material with poor electrical conductivity for a thermal flow sensor. A less good thermal conduction indeed need not play a decisive part. It is possible in the case of a tubular passageway, for example, to adapt the thickness of the tube wall, i.e. to make it sufficiently thin. This recognition opens the way to a successful combination or integration of a thermal flow sensor with an electrosmotic pump. Such a combination accordingly utilizes a thermal flow sensor having a passageway with walls made of a material having a poor electrical conductivity.

According to a further aspect of the invention, a device for measuring and controlling the mass flowrate of a liquid flow in a liquid flow channel is characterized in that the liquid flow channel comprises a first and a second sub-channel, the first sub-channel being an electrosmotic liquid channel that is provided with first voltage means for applying a first voltage difference in the longitudinal direction of the first sub-channel, wherein the second sub-channel has walls made of a material with poor electrical conductivity and is provided with means for forming a mass flowmeter of the thermal type, which means comprise output means for delivering an output signal which is representative of a measured mass flow, and wherein feedback means are present for feeding back the output signal to said first voltage means. The subchannels may be two separate channels which are interconnected in a liquid-exchanging manner, or they may be one and the same channel.

A mechanism for generating a liquid flow in a liquid flow channel is constituted by the so-termed electrosmosis. The liquid flow path is surrounded by an electrical insulator in this case. Charged insulator particles chemically bound to the insulator are present at the area of transition between the insulator and the liquid. The charge of these insulator particles causes the formation of oppositely charged particles adjacent the insulator wall in the liquid flow channel. The layer formed by the chemically bound insulator particles and the oppositely charged liquid particles is also denoted the electric dual layer. Owing to the presence of these oppositely charged particles, which are not chemically bound to the insulator, and owing to the electric field mentioned above and applied parallel to the direction of the liquid flow channel, a liquid flow will be generated along the walls of the liquid flow channel. The liquid flow along the walls will cause a liquid flow over the entire diameter of the liquid flow channel owing to the friction between the liquid particles.

The moving charged particles define a shearing surface at some distance from the insulator wall. The potential at the area of this shearing surface is denoted the ζ-potential (zeta potential). The value of the ζ-potential depends inter alia on factors such as the kind of liquid or insulator, the concentrations of the various particles in the liquid, the pH value, and the like.

It is possible to vary the potential of the outer surface of the insulator by means of a voltage source, as a result of which said ζ-potential in the liquid flow channel can be varied. Since the direction and velocity of the liquid flow in the channel are dependent on the level of the ζ-potential, the movement of the particles in the liquid can be controlled by means of the voltage source.

According to another aspect of the invention, a device for measuring and controlling the mass flowrate of a liquid flow in a liquid flow channel is characterized in that the liquid flow channel comprises a first and a second sub-channel, wherein the first sub-channel is an electrosmotic channel that is provided with first voltage means for applying a first voltage difference in the longitudinal direction of the first sub-channel and with second voltage means for applying a second voltage difference transversely to the wall of the first liquid channel, wherein the second sub-channel has walls made of a material with poor electrical conductivity and is provided with means for forming a mass flowmeter of the thermal type, which means comprise output means for delivering an electrical output signal which is representative of a measured mass flowrate, and wherein feedback means are present for feeding back the electrical output signal to said second voltage means.

According to this aspect of the invention, it becomes possible to control the value of the mass flowrate of the liquid flow by means of comparatively low control voltages, so that the control circuit can be constructed from standard electronic components such as transistors, integrated circuits, and the like.

In an embodiment of the invention, the device comprises an insulator member that defines the first sub-channel, and the second voltage means comprise a conductor member arranged over at least a portion of the outer surface of the insulator member. The conductor member acts as it were as a "gate" for amplifying or attenuating the liquid flow.

Preferably, the distance between the outer surface and the inner surface of the insulator member is at most 1 µm and in particular of the order of a few tens of nanometers. When the wall thickness of the insulator member is made so small, the control of the liquid flow can advantageously be achieved by means of a small second voltage difference, for example a voltage difference of less than 20 V. In addition, there will be smaller power losses and an improved heat removal is possible with such small wall thicknesses.

According to a further aspect of the invention, the device is directly connectable to standard electronic elements or integrated circuits, or may even be integrated therewith. This renders it possible to connect the device directly to and to have it controlled by the outputs of the standard electronic components, such as integrated circuits, without additional provisions being necessary for this.

According to a further aspect of the invention, the insulator member and the conductor member are manufactured from optically transparent materials. This has the advantage that the contents and/or the composition of the contents of the liquid flow channel can be optically detected in a simple manner.

The liquid flow channels mentioned above may take the form of self-supporting tubular members. According to a further aspect of the invention, the liquid flow channels are formed by voids, also denoted microchannels, provided in substrates, for example by etching or powder blasting. Very compact systems suitable for measuring and controlling very low mass flowrates are made possible thereby.

The invention also relates to a device for controlling the mass flowrate of at least one liquid flow, comprising a first substrate with a first channel provided therein with means for applying a transport voltage in longitudinal direction for transporting a liquid through the channel, wherein a thermal flow sensor is associated with the channel so as to provide an output signal by means of which the transport voltage can be controlled.

Further embodiments, advantages, characteristics, and details of the present invention will be clarified in the ensuing description which is given with reference to the appended Figures, in which:
Fig. 1 is a longitudinal sectional view of part of an electrosmotic channel;
Fig. 2 diagrammatically shows the principle of the electrosmotic mechanism;
Fig. 3 is a longitudinal sectional view of a combination of an osmotic channel and a mass flowmeter of the thermal type;
Fig. 4 is a diagram of a control circuit;
Fig. 5 is a longitudinal sectional view of a first embodiment of a microchannel with integrated pump action and flow measurement;
Fig. 6 is a longitudinal sectional view of a second embodiment of a microchannel with integrated pump action and flow measurement;
Fig. 7 shows a flow sensor embodiment with a planar substrate in plan view;
Fig. 8 is a cross-sectional view of a channel having an internal flow sensor; and
Fig. 9 is a diagrammatic plan view of a microchip body with two channels that meet so as to form a mixing device or a diluting device.

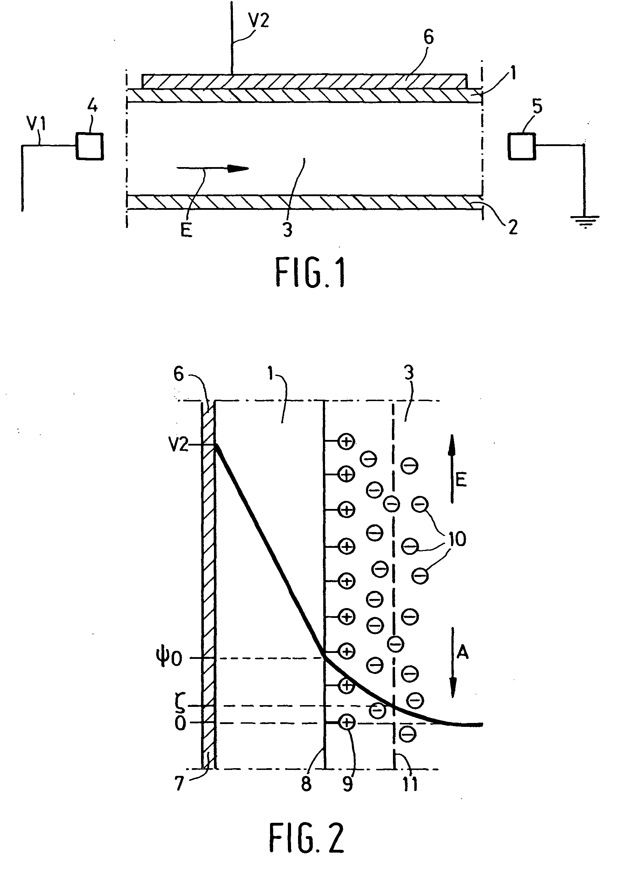

The longitudinal sectional view of Fig. 1 shows a liquid flow channel with pump action, in this case an electrosmotic channel, with walls of an electrically insulating material, with an upper wall 1 and a lower wall 2 between which a liquid 3 flows. The wall material may be chosen, for example, from the group comprising quartz, glass, glass ceramics, ceramics, and polymers. An anode 4 is located to the left of the channel and is brought to a voltage V₁. A cathode 5 is to the right of the channel and is connected to ground potential. The potential difference between the anode 4 and the cathode 5 generates an electric field E which transports positively charged particles in the direction of the arrow in the Figure and negatively charged particles in the opposite direction. The presence of positively or negatively charged particles in the liquid flow channel can be controlled through the choice of insulating material of the insulator, the pH value of the liquid 3, the concentration of the particles in the solution or suspension, etcetera. The presence of positively or negatively charged particles in the electric dual layer, however, may alternatively be controlled by means of a conductor 6 provided at the outer side of the insulator wall 1 and brought to a voltage V₂.

Fig. 2 shows the gradient of the positive voltage applied to the insulator wall by the conductor 6. The voltage is equal to V₂ at the boundary surface 7 between the conductor 6 and the wall 1 and decreases upon approaching the boundary surface between the wall 1 and the liquid 3. At the boundary surface 8, the voltage has a value ψ₀, which value is denoted the wall potential. The wall potential is the result of charged particles 9 being chemically bound to the wall 1, in this case positively charged particles. By way of compensation, negatively charged particles 10 will arise in the liquid. The voltage in the liquid flow channel decreases in proportion as the distance to the boundary surface 8 increases. The applied field E subjects the non-bound negatively charged particles 10 to a force in the direction of the arrow A. This electrical force decreases in proportion as the distance to the wall surface increases, because the number of negatively charged particles decreases in this direction. As a result of this electrical force, therefore, the portion of the liquid situated to the left of the shearing surface or inner Helmholtz surface in the electric dual layer will start to move parallel to the wall surface, whereupon the remaining portion of the liquid will be taken along by friction.

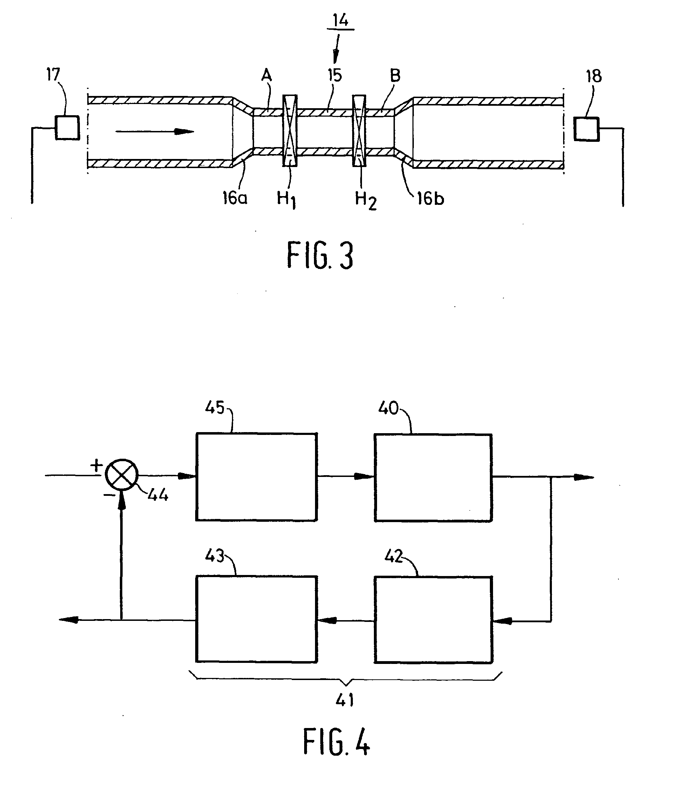

Fig. 3 diagrammatically shows an electrosmotic channel as described above which is coupled in a liquid-exchanging manner with a mass flow sensor 14. The flow sensor 14 in this case comprises a tube made of a material with poor thermal conductivity, such as in particular fused silica (FS) which has a very low electrical conductivity, which renders it possible to measure with enhanced sensitivity or to measure smaller flows, provided the wall thickness is sufficiently small. The invention therefore also relates to a thermal flow sensor comprising a flow tube made of a material with poor thermal conductivity, which tube is provided with means for supplying electric power and with means for determining the temperature in two positions on the tube.

The means for supplying electric power (heaters) may comprise, for example, one or several windings of resistance wire or a Peltier element.

Temperature differences may be measured by means of separate "thermometers" such as temperature-sensitive resistors, thermocouples, or a series arrangement of thermocouples (thermopile), or by means of the heater windings themselves.

The internal tube diameter is, for example, 0.05 mm, the external diameter, for example, 0.205 mm. The tube is arranged between two parts of the electrosmotic channel, the latter having an internal diameter of, for example, 0.25 mm. The couplings 16a, 16b are made of polyetheretherketone (PEEK). A platinum electrode 17, 18 is present at each end of the electrosmotic channel. When a voltage difference is applied between the electrodes, the sensor registers a liquid flow which is made visible as an output voltage of a measuring system connected to the windings H₁ and H₂ of the sensor tube 15.

Table 1 shows by way of example what happens when different values are set for the voltage difference between the platinum electrodes 17, 18, with water being the liquid.

**Table 1:**

| Water flow resulting from voltage applied across water column | | | | | | |
|---|---|---|---|---|---|---|
| Voltage Difference (V) | Current I (µA) | Power P (mW) | Calculated Column ΔT (°C) | Sensor Output (V) | H₂O Flow (nl/min) | Velocity in Sensor (µm/s) |
| 0 | 0 | 0 | 0 | 0.017 | 0 | 0 |
| 200 | 11 | 2.2 | 0.0068 | 0.027 | 2.0 | 16.98 |
| 400 | 22 | 8.8 | 0.0271 | 0.036 | 3.8 | 32.26 |
| 600 | 31 | 18.6 | 0.0573 | 0.047 | 6.0 | 50.93 |
| 800 | 43 | 34.4 | 0.1059 | 0.058 | 8.2 | 69.60 |
| 1000 | 55 | 55 | 0.1694 | 0.066 | 9.8 | 83.18 |

### Result:

A flow arises in the case of a voltage difference across a water column with PBB dissolved therein as a buffer. This flow amounts to approximately 2 nl/min H₂O for every 200 V.

For measuring the mass flowrate of the liquid flow through the sensor tube 15, the sensor tube is provided with means for forming a thermal flow sensor. To achieve this, an electrical winding (heater) H₁ is in an upstream position A and an electrical winding (heater) H₂ is in a downstream position B. H₁ and H₂ may be formed, for example, by resistance wire coiled around the tube and may act both as heaters and as temperature sensors, depending on the measuring method. CT (constant temperature) flow measuring method: during heating of H₁ a control circuit ensures that the temperature difference between the positions A and B is kept constant. A voltage is derived from the control circuit, which voltage is representative of the mass flow of the liquid flowing through the sensor tube.

This voltage can be compared with a desired voltage, and the comparison result can be fed back to the electrosmotic channel for controlling the liquid flow. However, the CP (constant power) and in particular the TB (thermal balancing) flow measuring method are preferred for measuring weak flows. This will be explained in more detail with reference to the diagram of Fig. 4, which shows a closed-loop control circuit.

Fig. 4 shows the operation of the flow control device according to the invention in the form of a block diagram. A liquid flow channel is provided with means for having it operate as an electrosmotic pump 40. The mass flow of the liquid is measured by the (thermal) flow sensor 41 comprising, for example, a fused silica tube provided with two temperature-sensitive resistors coiled around the tube and included in a sensor measuring circuit 42 with a Wheatstone bridge and a control loop. The output signal of the sensor measuring circuit 42 is supplied to a signal conditioner unit 43, in which it is linearized and amplified. The resulting value, which is a measure for the mass flowrate, is fed to a comparator 44 which compares it with a preset value (setpoint) representing the desired flow. The differential or error signal is supplied to a control unit 45 which turns it into a control signal lying, for example, in a region between 0 and 1000 V and suitable for being supplied to the control means of the electrosmotic pump 40. Alternative thermal flow measuring methods capable of measuring in particular weaker flows are the TB (thermal balancing) measuring method and the CP (constant power) measuring method.

The electrosmotic liquid flow channel preferably has walls of a material of low electrical conductivity such as fused silica or, for example, a glass-type, ceramic, or polymeric material. It is favorable if the walls of the liquid flow channel and the sensor tube are both made of the same material, for example fused silica. The walls may be coated with a material having the desired properties, if so desired. For example, the liquid flow channel may be formed by a glass capillary whose walls are coated with polyimide.

Further application options within the scope of the invention are:
- Filling of the channel with a filler, for example globules. An additional effect can be obtained thereby (separation of components) with an integrated flow measurement control.
- Column filling for chromatography, also CEC. The column filling may take over the pump action entirely from the electrosmotic flow (EOF) along the wall. The filler material then at the same time acts as a valve such that the liquid is incapable of flowing without an electric field. This may take place in combination with flow measurement for controlling the valve function.
- For controlling liquids in channels (for example for analysis), an existing channel in a (micro)chip may be replaced by a channel with an integrated pump and flow sensor function according to the invention. When placed upstream and/or downstream of an existing microchip, this renders possible a number of different applications.
- Certain components may be added to the liquid for rendering the channel wall functional. This means in particular that surface-active agents may be added. A familiar one is CTAB (cetyltriammoniumbromide). An application may be a chemical feedback of the flow.

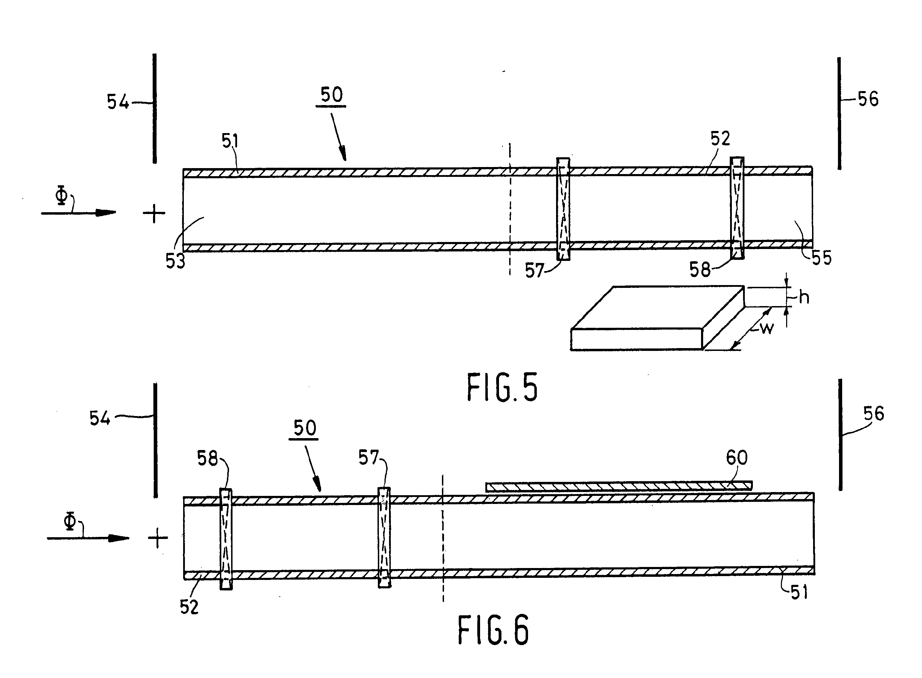

Fig. 5 is a diagrammatic longitudinal sectional view of a liquid flow channel 50 wherein a sub-channel 51 with (for example electrosmotic) pump action and a sub-channel 52 in which the flow is measured are integrated into one microchannel. An electrode 54 is provided at the end 53 and an electrode 56 at the end 55 of the channel 50. The application of a voltage difference between the electrodes 54, 56 generates an electric transport field in the longitudinal direction of the channel 50. To obtain a good pump action, the channel dimension is preferably smaller than 250 µm in at least one direction (h: < 250 µm in the inset of Fig. 5). The cross-section of the channel 50 may be round or rectangular, or possibly stellate. If the channel was manufactured in a blasting process (for example powder blasting) in a body of, for example, ceramic or glass material, the cross-section may be parabolic with one flattened side. After etching, the cross-section is often trapezoidal. The sub-channel 52 is provided with elements 57, 58 that may serve as temperature sensors and/or heaters in the thermal flow measuring process. A voltage determined by means of said process may be fed back to the source that provides the electrodes 54, 56 with a voltage.

Fig. 6 shows a microchannel similar to that of Fig. 5. Here, however, an additional electrode 60 is provided on the outer surface of the sub-channel 51 with pump action. In this arrangement, a signal measured in the flow measuring process in the sub-channel 52 is fed back to a source that applies a voltage to the electrode 60. The channel wall in the embodiment of Fig. 6 should be so thin opposite the electrode 60 that an electrical capacitive coupling with the liquid in the channel is possible. The voltage feedback in the devices of Figs. 5 and 6 realizes a flow control function capable of achieving an ultra-constant, pulse-free flow.

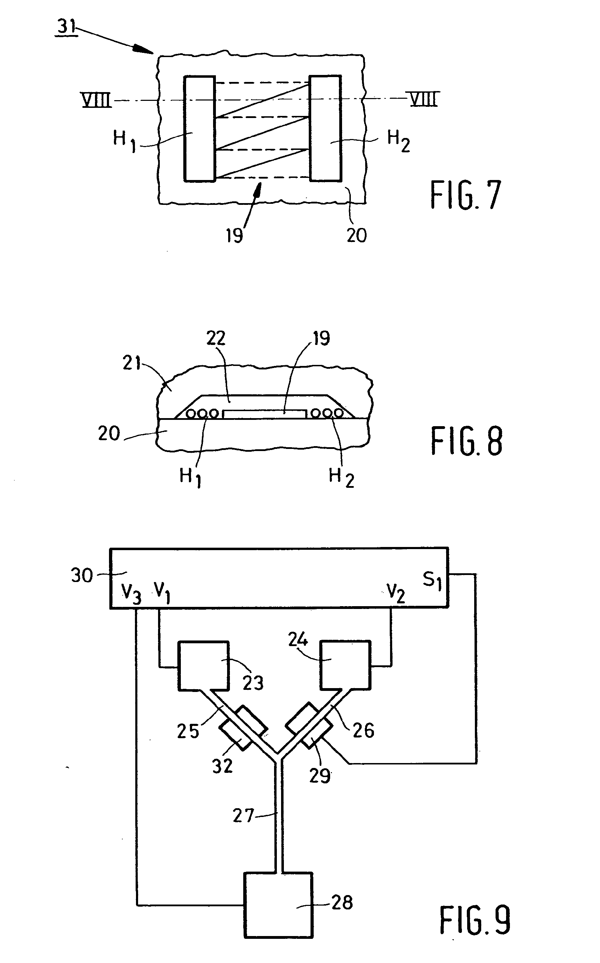

Fig. 7 is a diagrammatic plan view of a substrate 20 on which heater/sensor elements H₁ and H₂ are provided. H₁ and H₂ may be provided in the form of, possibly meandering, conductor tracks. The temperature difference between H₁ and H₂ can be measured in various manners. A thermo-element or in particular a thermopile 19 may be provided for this purpose between H₁ and H₂. An alternative is to construct H₁ and H₂ from a temperature-sensitive resistance material and to have them act as a temperature sensor at the same time. The substrate 20 with the sensor components H₁, H₂ and 19 forms a planar flow sensor 31 over which a flow to be measured can be passed. The flow sensor 31 may be positioned, for example, in a flow tube with pump action or in a microchannel with pump action.

The sensor components are preferably coated with a passivating layer for protection against aggressive liquids. This may be, for example, a thin layer of glass, Si nitride, or Si oxide.

The microchannel with which a flow sensor of the type shown in Fig. 7 mounted on a first substrate 20 is brought into communication may be, for example, a channel 22 provided in a second substrate 21, for example by means of etching or blasting. The substrates 21 and 22 may be interconnected in various ways, for example by a direct bonding technique, whereby a construction as shown in cross-section in Fig. 8 is obtained. The entire assembly of Fig. 8 may form part of a microchip body comprising one or a plurality of such microchannels 22, which may have an integrated pump and sensor function.

Fig. 9 diagrammatically shows a plan view of a microchip body with two transport channels 25 and 26 which are connected to respective reservoirs 23 and 24. The channels 25 and 26 come together at P and from there form a combined channel 27 which is connected to a reservoir 28. The channels and reservoirs are provided in a first substrate body (not shown).

Flow sensor components (such as in Fig. 7) are locally provided on a second substrate body (not shown), and the two substrate bodies are joined together (as in Fig. 8) such that the channel 26 is provided with an internal flow sensor in the area 29. Similarly, for example, the channel 25 is provided with an internal flow sensor in the area 32. The channel 27 may also be provided with an internal flow sensor, if so desired.

The system of channels and reservoirs is connected to a control device 30 for providing the necessary transport voltages such as V₁ and V₂. The invention utilizes electrosmotic flow, in particular for mixing flows of materials from the reservoirs 23 and 24 with one another in a controlled and reproducible manner or for diluting one of these flows.

As was explained with reference to Fig. 4, the flow, for example that through channel 26, can be controlled by means of the signal S₁ of the internal flow sensor.

Instead of having two channels come together as in Fig. 9, it is alternatively possible to split up one channel into two or more channels. The use of flow sensors associated with the respective channels, whose output signals control the transport voltages, then offers a possibility of a controlled and reproducible dilution, possibly even serial dilution.

Summarizing: the invention relates to a device for controlling the mass flowrate of a liquid flow in a liquid flow channel, wherein the liquid is transported from a reservoir through the channel by electrosmotic pumping. The channel is associated with thermal flow sensor means which provide an output signal for controlling the pump action.

## Claims

1. A device for measuring and controlling the mass flowrate of a liquid flow in a liquid flow channel, **characterized in that** the liquid flow channel is a liquid flow channel with pump action, and **in that** a flow sensor of the thermal type is associated with the liquid flow channel with pump action, which flow sensor produces an output signal which is representative of a measured mass flowrate, said output signal controlling the pump action.

2. A device for measuring and controlling the mass flowrate of a liquid flow in a liquid flow channel, **characterized in that** the liquid flow channel comprises a first and a second sub-channel, wherein the first sub-channel is an electrosmotic liquid channel that is provided with first voltage means for applying a first voltage difference in the longitudinal direction of the first sub-channel, wherein the second sub-channel has walls made of a material with poor electrical conductivity and is provided with means for forming a mass flowmeter of the thermal type, which means comprise output means for delivering an electrical output signal which is representative of a measured mass flow, and wherein feedback means are present for feeding back the electrical output signal to said first voltage means.

3. A device for measuring and controlling the mass flowrate of a liquid flow in a liquid flow channel, **characterized in that** the liquid flow channel comprises a first and a second sub-channel which are connected to one another in a liquid-exchanging manner, wherein the first sub-channel is an electrosmotic liquid channel that is provided with first voltage means for applying a first voltage difference in the longitudinal direction of the first sub-channel and with second voltage means for applying a second voltage difference transversely to the wall of the first liquid channel, wherein the second sub-channel has walls made of a material with poor electrical conductivity and is provided with means for forming a mass flowmeter of the thermal type, which means comprise output means for delivering an electrical output signal which is representative of a measured mass flowrate, and wherein feedback means are present for feeding back the electrical output signal to said second voltage means.

4. A device as claimed in claim 2 or 3, **characterized in that** the first and the second sub-channel are separate channels which are connected to one another in a liquid-exchanging manner.

5. A device as claimed in claim 2 or 3, **characterized in that** the first and the second sub-channel are one and the same channel.

6. A device for controlling the mass flowrate of at least one liquid flow, comprising a first substrate with a first channel provided therein and having means for applying a transport voltage in longitudinal direction for transporting a liquid through the liquid flow channel, wherein a thermal flow sensor is associated with the channel so as to provide an output signal by means of which the transport voltage can be controlled.

7. A device as claimed in claim 6, **characterized in that** the flow sensor is provided on a second substrate, which second substrate is connected to the first substrate in a manner such as to associate the flow sensor with the first channel.

8. A device as claimed in claim 6, **characterized in that** the first substrate further comprises a second transport channel that is associated with a second flow sensor.

9. A device as claimed in claim 8, **characterized in that** the first and the second channel merge into each other for mixing the liquids transported through said channels.

10. A device as claimed in claim 8, **characterized in that** the first and the second channel branch off from a third channel for diluting a liquid transported by said third channel.

11. A thermal flow sensor comprising a flow tube with walls made of a material with poor electrical conductivity, which tube is provided with means for supplying electric power and with means for determining the temperature in two positions on the tube.
